# EUROPEAN PATENT SPECIFICATION

(11) **EP 1 802 906 B1**
(45) Date of publication and mention of the grant of the patent: **28.04.2010**
(21) Application number: 04791905.5
(22) Date of filing: 20.10.2004
(51) Int. Cl.: F16L 15/04

(54) **SEALING MATERIAL AND PROCESS FOR SEALING PIPING CONNECTIONS, MANUFACTURING PROCESS AND DISPENSER FOR THE SEALING MATERIAL**
DICHTUNGSMATERIAL UND VERFAHREN ZUM ABDICHTEN VON ROHRVERBINDUNGEN, HERSTELLUNGSPROZESS UND ABGABEVORRICHTUNG FÜR DAS DICHTUNGSMATERIAL
MATERIAU D'ETANCHEITE ET PROCEDE D'ETANCHEITE POUR RACCORDS DE TUYAUTERIE, PROCEDE DE FABRICATION ET DISTRIBUTEUR POUR CE MATERIAU

(43) Date of publication of application: 04.07.2007
(73) Proprietor: Resitape Srl, 20121 Milano (IT)
(72) Inventor: BERARDINELLI, Roberto, I-24040 Arzago d'Adda (IT); MURRAY, Noel, CH-1963 Vetroz (CH); POLI, Clara, I-20129 Milano (IT); VACCAROSSA, Mario, I-20060 Vignate (IT)
(74) Representative: Dragotti, Gianfranco
(86) International application number: PCT/IT2004/000571
(87) International publication number: WO 2006/043289

(56) References cited:
- WO-A-02/29290
- US-A- 3 664 915
- US-A- 4 606 134
- US-A- 5 765 740
- US-A1- 2004 070 154

## Description

The present invention relates to the sealing of joints of pipes intended for conveying fluids and, more specifically, to a material for sealing joints during the formation of said joints, and the method for manufacture thereof.

It is well known that, when two sections of piping are connected together by means of threading, a sealant is applied in the mutual screwing zone in order to ensure a seal preventing leakage of the fluid which flows inside the pipe.

Very often this fluid is at a pressure higher than that existing outside the pipe, so that, if there is not a proper seal, unacceptable external leakages occur, resulting in the problems and drawbacks which are well known and do not require specific and detailed comments: it is sufficient to consider pipes used for conveying and distributing inflammable liquids or gases in order to appreciate readily how important and delicate these seals are.

In order to form these seals, in the past filaments of plant material (raffia or tow) were used, said material being wrapped around the threading of the smaller-diameter section, with the application of paint or a paste onto the wound filament. The resultant seal, however, did not provide optimum results, in particular because with time drying of the paint resulted in deterioration of the hermetic seal and therefore the need for frequent maintenance and repair.

More recently, this system has been replaced by the application of a tape of plastic material, in particular polytetrafluoroethylene (PTFE).

With regard to the problem of sealing, it must be remembered that, when two threaded sections of pipe are screwed together - the thread being situated on the outer end surface of the smaller-diameter section and on the inner end surface of the larger-diameter section - the crests or ridges of the respective threads are seated inside the hollows of the opposite thread, but between these two oppositely arranged parts there remains a space - albeit small - through which leakage of fluid from the higher pressure zone to the lower pressure zone may occur. The sealing material has precisely the function of filling this space and keeping it filled and closed hermetically with the passing of time.

In this connection, it must be remembered that, during formation of a joint, after application of the sealing material onto one or both the threaded portions, preferably onto the threaded end portion of the smaller-diameter section which has the threading on its outer surface, the two sections are screwed together and this action ensures final positioning of the sealing material in the spaces which are left free between crests or ridges of a thread and hollows of the other thread. However, the screwing step cannot be controlled so as to ensure the perfect desired positioning of the sealing material in the seats which ensure the seal.

Moreover, the sealing function must be ensured even when the joint operates in an unfavourable environment, as for example when the pipe is buried such that it is subject to the action of moisture and any substances present in the ground. In addition to this condition, it is also necessary to mention the equally unfavourable effect of temperature fluctuations to which the joint is exposed during the various seasons, which fluctuations may result in expansion and/or shrinkage of the material forming the pipe sections which are joined together: these expansion and shrinkage phenomena obviously may have an effect on the seal.

A further problem may consist in the temperature of the fluid which is conveyed inside the jointed pipe, which fluid may for example be high-temperature and high-pressure steam.

Considering again the example of the two abovementioned cases of sealing materials according to the known art, the sealing material not only fills at least partially the hollows between the threads of the threading, but (especially following the screwing action) may cover partly the crests or ridges of the threads, to the detriment, therefore, of a perfect seal.

WO 02/29290 discloses a corrosion seal for threaded connections, while US 2004/70154 discloses a method for sealing threaded pipe joints.

It has now been discovered - which discovery forms the main subject of the present invention - that the problems and drawbacks encountered hitherto in the known sealing materials and in the resultant seals are fully solved, using as a sealing material a polytetrafluoroethylene monofilament with a square, preferably rectangular cross-section.

In the preferred embodiment of the invention, the abovementioned material is combined, upon application to the threading of the pipe section to be joined with another similarly threaded section which can be connected to the first section, with a lubricant which is preferably a normal detergent composition - preferably biodegradable - which is applied in the form of a few drops onto the wound PTFE monofilament and then spread over the whole extension of the PTFE wound thread.

If screwing of the second tube section is then performed with the normal degree of tightness, an excellent seal is obtained.

Still in relation to the preferred embodiment, the PTFE monofilament is wound along the union in the direction of the threading without any particular winding method, the winding extending in the axial direction over a minimum length of 8-10 mm, which is chosen depending on different parameters, such as the diameter of the pipe, the size of the threading and the quality of the material forming the pipe.

Without imposing any undue limitations on the present invention, it seems plausible that the excellent seal obtained with the monofilament according to the present invention is obtained owing to the different behaviour of the monofilament compared to the conventional sealing materials.

Reference was previously made to the function which the sealing material must perform in relation to the two threads which interact during formation of a joint. It must also be remembered that the threads of the connections between pipe sections are never perfect and in particular that the spaces which remain between the crest of a thread and the bottom of the hollow in the opposite threading inside which this thread is seated vary.

In the case of conventional sealing materials, in particular tow, the filament-like material must be wound around the threading in a sufficient quantity to fill the maximum residual thickness between the ridge of a thread and bottom or opposite hollow of the threading inside which this crest is seated.

In order to ensure the seal, especially when the joint is intended to operate in the presence of fluids under pressure and/or at temperatures very different from the ambient temperature, in the case of raffia or tow, a substantial quantity of paint or paste must be added. In the case, however, of plastic tape, the screwing action causes cutting of the tape along the ridge or crest of the thread and the accumulation of tape in the residual space between the crest and facing hollow: the tape, however, also lines the sides of the threads so that a perfect joint is not obtained between threads in the zones which are critical for the sealing effect.

In the case of the PTFE monofilament according to the present invention, the monofilament is seated in the hollow of the successive threads and, when screwing of the other pipe section with the opposite threading is performed, the monofilament, owing to its ductility and compressibility, is subject to elongation and more generally is moulded, creating a kind of film of PTFE which is seated and the fills the spaces which are left free during screwing.

The small quantity of additive consisting of liquid detergent has the sole function of assisting screwing of the second pipe section onto the thread of the first section with the wound PTFE monofilament.

The present invention also relates to a method for forming hermetically sealed joints between pipes, of the type in which the two pipes to be joined have diameters which are slightly different from each other so that the smaller-diameter pipe which has a threading on the outer surface of the end to be joined may be screwed into the end portion of the larger-diameter pipe having on its inner surface a threading of corresponding pitch, characterized by the following operations:
1) winding, over a predefined number of turns, a polytetrafluoroethylene monofilament with a square, preferably rectangular cross-section around said threaded end portion of the smaller-diameter pipe;
2) applying onto said wound material a lubricant, preferably a detergent liquid composition, even more preferably of the biodegradable type, in the form of a few drops and spreading the drops over the outer surface of the wound PTFE monofilament; and
3) screwing the internally threaded end of the larger-diameter pipe onto the said externally threaded end of said smaller-diameter pipe with said wound material until a good degree of tightness is achieved between the two pipes.

The number of wound turns of the monofilament on the end of the smaller-diameter pipe depends on the quality and diameter of the pipe as well as on the greater or lesser fineness of the threading.

For example, in the case of good-quality pipes with a ½-inch diameter and with a fine thread, 8 to 10 wound turns are sufficient, while in the case of poor quality pipes with the same diameter and a large thread, the number of turns increases to 10-12.

If we then consider pipes with a diameter of 1½ inches the aforementioned values become respectively 16-20 and 20-24.

As regards the quantity of lubricating composition to be applied, the wound material must be moistened slightly in order to facilitate the subsequent screwing of the larger-diameter pipe.

Finally, as regards the tightening force, this is substantially the same as that which is applied when screwing together two tubular piping sections until the condition is reached where it is no longer possible to perform a further relative rotation, without the application of excessive force.

The present invention furthermore relates to a method for manufacturing the PTFE monofilament, which envisages the steps of:
(1) preparing an extrusion mixture comprising pure PTFE in the form of a fine powder and an agent or additive for extrusion of PTFE, which is well known per se in the art of monofilament extrusion;
(2) preparing a preform by means of mechanical pressing of the said mixture;
(3) extruding individual monofilaments, preferably by means of a multiple extrusion nozzle extruder, obtaining single monofilaments with a diameter of between 0.3 and 1.9 mm, preferably not less than 1.2 mm and with a density of 1.5 g/cm³, which is characteristic of unsintered PTFE;
(4) heating the monofilaments to a temperature suitable for extraction of the extrusion additive, which temperature for known additives is of the order of 200°C;
(5) stretching the resultant monofilament at a temperature of between 260 and 315°C so as to reduce its density to a value of between 0.2 and 1 g/cm³;
(6) calendering the monofilament so as to impart to the cross-section a square, preferably rectangular shape, with a thickness of less than 2 mm and width of less than 3 mm; and
(7) winding onto a reel of predetermined length and diameter.

With the method according to the present invention, the monofilament useful as a sealing material is therefore obtained.

It is worth noting that, during the calendering step, which is preferably performed at the same time as winding onto a reel, the density of the monofilament increases to a value of between 0.7 and 1.1 g/cm³.

For a better comprehension of the invention, the present description also relates to a device, which is not part of the invention, for dispensing the PTFE monofilament and the screwing lubricant.

This dispenser consists of a box-like housing comprising a first chamber able to contain a reel of wound monofilament, said box-like housing having an end wall which delimits said first chamber and has, formed therein, a hole, preferably aligned coaxially with the said reel, for dispensing the monofilament which is unwound from the reel by means of a simple pulling force applied to the end of the monofilament projecting from said end wall, said wall having preferably means for cutting a section of said monofilament of the desired length so that a tail end of the monofilament always remains projecting from said end wall, said box-like housing also comprising a second chamber for housing an extractable dispenser of a detergent composition, said dispenser being preferably of the so-called "roll-on" type.

The aspects of the dispenser will appear more clearly from the description which follows with reference to the accompanying drawings in which:
Fig. 1 is a side cross-section view of the dispenser;
Fig. 2 is an exploded view of the dispenser according to Fig. 1; and
Fig. 3 is a cross-section view of the PTFE monofilament.

With reference to the Figures, the dispenser consists of a box-like housing 10, with a cylindrical shape, inside which a partition 12 defines two chambers, 14 and 16, respectively.

The chamber 14 is intended to house a reel 18 having, wound around it, a predetermined quantity (normally of the order of 100 or more metres) of PTFE monofilament as defined above.

The top end of the chamber 14 is delimited by a lid or wall 20 which is preferably slightly frustoconical and which has at its vertex and, in any case coaxially with respect to the axis of the chamber 14, a hole 22 of suitable dimensions through which the monofilament 24 forming the reel 18 passes and can therefore be extracted.

The lid 20 has a flange with varied thicknesses for allowing insertion into the end of the chamber 14 over a predetermined distance and resting on the end edge of the box-like housing 10.

Preferably winding of the monofilament 24 onto the reel 18 is performed so that the monofilament is freely extractable from the internal axial hole of the reel 18.

The second chamber 16 of the box-like housing 10 is intended to house a device for dispensing lubricant or a detergent composition of the so-called roll-on type, said device consisting of a container 30 which has at the top a frustoconical wall 32 inside which a dispensing hole 34 is formed.

The bottom end of the container 30 is closed by a cover 36 from which there projects a tubular guide element 38 intended to house a compression spring 40 which supports a ball 42 having a diameter slightly greater than that of the hole 34.

The perimetral edge 44 of the cover 36 has a projecting lip-type shape 46 which engages inside a corresponding cavity in the end wall of the box-like housing 10 opposite the chamber 16, so that when the cover 36 is mounted on the bottom of the container 30 a seal is ensured against the leakage, through the bottom of the container, of the detergent liquid composition contained inside the said container.

Mounting of the cover 36 also brings the ball 42 into contact with the hole 34 which is thus closed.

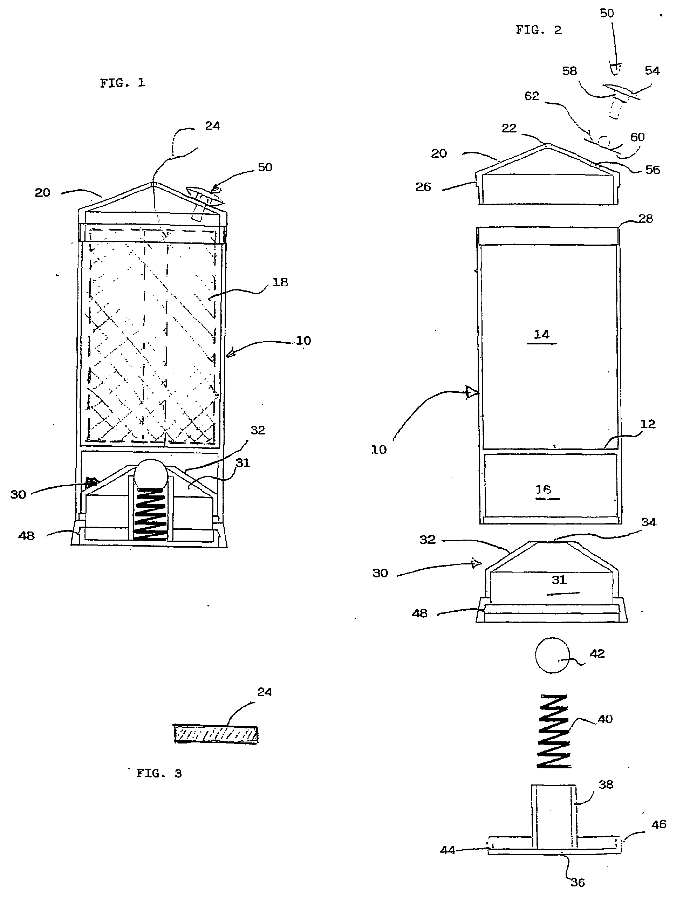

From Figure 1 it can be readily appreciated that the height of the tubular guide element 38 is less than the axial height of the container 30 so that a lateral portion of the ball 42 is in contact with the liquid composition present inside the container (more precisely inside the chamber 31 thereof) and is wetted by it.

Finally, still with reference to the dispenser, a cutting device generally denoted by the reference number 50 is mounted on the outer surface of the upper lid 20.

This device may be of the type normally used in combination with dispensers of filament-like materials.

However, in the present case, said device consists of a pin 52 with a widened umbrella head 54. The pin 52 is able to be seated inside a corresponding hole 56 formed in the wall 20, being fixed there in a conventional manner. The head 54 is kept spaced from the outer surface of the lid 20 by a collar 58. A washer 60 is arranged between the base 58 and the outer wall of the lid 20 and has, projecting therefrom, cutting elements 62 consisting of a steel blade with a high degree of elasticity and shaped with a suitable curvature so that they extend upwards and are splayed outwards radially with respect to the axis of the hole 56.

In the embodiment shown these cutting elements are four in number and therefore arranged at 90° with respect to each other.

During normal use of the dispenser, the monofilament 24 is extracted through the hole 22 and wound around the device 50, in particular between the head 54 and the washer 60 so that the monofilament makes contact without any cutting action occurring with the outer surface of the cutting elements 62.

When a joint is to be formed, the monofilament is unwound from the cutting device and winding is performed around the threading of the smaller-diameter pipe section over the desired distance, in the manner described above.

When the desired degree of winding has been completed, the monofilament is engaged against the cutting device 50, by applying a tugging action so that the monofilament is cut by the cutting element 62 with which it makes contact, without having to be arranged in a precise given position.

The remaining part of the monofilament downstream of the cutting device is again applied onto the threading of the pipe section, while the other end of the monofilament is wound one or more turns without being tensioned on the cutting device 50.

At this point the container 30 for applying the detergent composition is extracted from the bottom of the box-like housing 10, i.e. the chamber 16, and it is placed in contact with the monofilament portion already wound onto the threading of the pipe section, causing it to slide so that the ball 42, precisely because of the rotation imparted to it, transfers to the aforementioned winding the small quantity of detergent composition which adheres to its surface.

As already mentioned, with a manual action the detergent composition is spread more uniformly over the wound monofilament surface and then the container 30 is repositioned inside the chamber 16 of the box-like housing.

Screwing of the other pipe section onto that with the wound monofilament is then performed and a normal tightening action is applied in order to obtain an excellent seal.

With respect to the fluid-tightness of the joint, sealing tests were conducted at official material testing laboratories.

Tests worth mentioning are those carried out at DVGW-Forschungstelle, Prueflaboratorium Gas in Karlsruhe (Germany) which, on 19 February 2004, issued a certificate attesting to the fact the sealing material according to the present invention complied with the European standards EN751.3 FRp and GRp. The tests were conducted in cycles performed at a temperature of 20°C to 150°C using nitrogen compressed to 30 bar and with the pipe immersed in a tank containing water so as to indicate any leakages.

It is worth noting that, as indicated by the letters F and G in the report, the sealing material according to the invention was tested and approved for types of finish of fine and large threads; moreover, the code Rp indicates that the sealing material maintained its sealing action even when the joint was unscrewed by 45°.

In further tests conducted by the same body at the University of Karlsruhe the sealing material according to the invention maintained its sealing action in the presence of nitrogen compressed to 100 bar inside a bath of water at room temperature (standard EN751).

The following advantages are worthy of mention in connection with the sealing material according to the present invention:
- absolute chemical inertia with respect to any chemical product and solvent, even when of an aggressive nature;
- chemical inertia and absence of effects on the fluids which are conveyed inside the pipes equipped with the joints in question;
- absolute resistance to the formation of encrustations, oxidation and surface weakening;
- absolute resistance to aggressive agents of a microbiological and/or fungal nature;
- stability in the temperature range -200°C to +200°C;
- non inflammable and non combustible;
- extremely water repellent and totally resistant to hydrolysis;
- remains pliable and malleable indefinitely;
- absence of additives and external agents, except for the lubricant which, however, is a common biodegradable detergent.

Moreover, as already mentioned, the PTFE monofilament according to the invention does not requires the use of paste or paint in order to perform its action.

## Claims

1. Sealing material for pipe joints, **characterized in that** it consists of a polytetrafluoroethylene monofilament with a rectangular cross-section, said PTFE monofilament having a thickness less than 2 mm and width less than 3 mm.

2. Sealing material for pipe joints according to Claim 1, **characterized in that** said PTFE monofilament has a density of between 0.7 and 1.1 g/cm³.

3. Method for forming hermetically sealed joints between pipes, of the type where the two pipes to be joined together have diameters which are slightly different from each other so that the smaller-diameter pipe which has a threading on the outer surface of the end to be joined may be screwed into the end portion of the larger-diameter pipe with a thread of corresponding pitch on its inner surface, **characterized by** the following operations:
(1) winding, over a predefined number of turns, a polytetrafluoroethylene monofilament with a rectangular cross-section according to claim 1 onto the said threaded end portion of the smaller-diameter pipe;
(2) applying onto the said wound material a few drops of a lubricant and spreading the drops over the outer surface of the wound PTFE monofilament; and
(3) screwing the internally threaded end of the larger-diameter pipe onto the said externally threaded end of said smaller-diameter pipe with said wound material until a good degree of tightness is achieved between the pipes.

4. Method for forming hermetically sealed joints between pipes according to Claim 3, **characterized in that** said lubricant is a detergent liquid composition.

5. Method for forming hermetically sealed joints between pipes according to Claim 4, **characterized in that** said detergent liquid composition is biodegradable.

6. Method for forming hermetically sealed joints between pipes according to Claim 3, **characterized in that** said lubricant is added in quantities such that, after spreading, the wound PTFE monofilament is slightly moist.

7. Method for manufacturing the PTFE monofilament useful as a sealing material according to each of the preceding claims, which envisages the steps of:
(a) preparing an extrusion mixture comprising pure PTFE in the form of a fine powder and an agent or additive for extrusion of PTFE, which is well known per se in the art of monofilament extrusion;
(b) preparing a preform by means of mechanical pressing of the said mixture;
(c) extruding individual monofilaments, preferably means of a multiple extrusion nozzle extruder, obtaining single monofilaments with a diameter of between 0.3 and 1.9 mm and with a density of 1.5 g/cm³, which is characteristic of unsintered PTFE;
(d) heating the monofilaments to a temperature suitable for extraction of the extrusion additive;
(e) stretching of the resultant monofilament at a temperature of between 260 and 315°C so as to reduce its density to a value of between 0.2 and 1 g/cm³;
(f) calendering the monofilament so as to impart a rectangular shape to the cross-section; and
(g) winding onto a reel of predetermined length and diameter.

8. Method for manufacturing the PTFE monofilament according to Claim 7, **characterized in that** said monofilaments obtained in stage (b) have a diameter of not less than 1.2 mm.

9. Method for manufacturing the PTFE monofilament according to Claim 7, **characterized in that** said heating in stage (c) is performed at a temperature of the order of 200°C.

10. Method for manufacturing the PTFE monofilament according to Claim 7, **characterized in that** said stage (f) imparts to the cross-section of the monofilament a rectangular shape, with a thickness less than 2 mm and a width less than 3 mm.

11. Method for manufacturing the PTFE monofilament according to Claim 7, **characterized in that** said steps (f) and (g) are performed simultaneously and the monofilament resulting from the calendering step has a density of between 0.7 and 1.1 g/cm³.

## Patentansprüche

1. Dichtungsmaterial für Rohrverbindungen, **dadurch gekennzeichnet, dass** es aus einem Polytetrafluorethylen-Monofilament mit rechteckigem Querschnitt besteht, wobei das PTFE-Monofilament eine Dicke von weniger als 2 mm und eine Breite von weniger als 3 mm aufweist.

2. Dichtungsmaterial für Rohrverbindungen nach Anspruch 1, **dadurch gekennzeichnet, dass** das PTFE-Monofilament eine Dichte von 0,7 bis 1,1 g/cm³ aufweist.

3. Verfahren zum Bilden hermetisch abgedichteter Verbindungen zwischen Rohren des Typs, wobei die zwei Rohre, die miteinander verbunden werden sollen, Durchmesser aufweisen, die voneinander geringfügig abweichen, so dass das Rohr mit geringerem Durchmesser, das ein Gewinde auf der äußeren Oberfläche des zu verbindenden Endes aufweist, in den Endabschnitt des Rohres mit größerem Durchmesser eingeschraubt werden kann, welches ein Gewinde von entsprechendem Gewindegang auf seiner inneren Oberfläche aufweist, **gekennzeichnet durch** die folgenden Vorgänge:
(1) Aufwickeln über eine vorherbestimmte Anzahl von Umdrehungen eines Polytetrafluorethylen-Monofilaments mit einem rechteckigen Querschnitt gemäß Anspruch 1 auf das Gewindeendstück des Rohrs mit kleinerem Durchmesser;
(2) Aufbringen einiger Tropfen eines Schmiermittels auf das aufgewickelte Material und Verteilen der Tropfen über die äußere Oberfläche des aufgewickelten PTFE-Monofilaments; und
(3) Aufschrauben des Innengewindeendes des Rohres mit größerem Durchmesser auf das Außengewindeende des Rohrs mit kleinerem Durchmesser mit dem aufgewickelten Material bis zwischen den Rohren ein gutes Ausmaß an Dichtheit erreicht ist.

4. Verfahren zum Bilden hermetisch abgedichteter Verbindungen zwischen Rohren gemäß Anspruch 3, **dadurch gekennzeichnet, dass** das Schmiermittel eine flüssige Reinigungsmittelzusammensetzung ist.

5. Verfahren zum Bilden hermetisch abgedichteter Verbindungen zwischen Rohren gemäß Anspruch 4, **dadurch gekennzeichnet, dass** die flüssige Reinigungsmittelzusammensetzung biologisch abbaubar ist.

6. Verfahren zum Bilden hermetisch abgedichteter Verbindungen zwischen Rohren gemäß Anspruch 3, **dadurch gekennzeichnet, dass** das Schmiermittel in solchen Mengen zugesetzt wird, dass nach dessen Verteilung das aufgewickelte PTFE-Monofilament geringfügig feucht ist.

7. Verfahren zur Herstellung des PTFE-Monofilaments, verwendbar als Dichtungsmaterial gemäß einem der vorhergehenden Ansprüche, umfassend die folgenden Schritte:
(a) Herstellen einer Extrusionsmischung umfassend reines PTFE in Form eines feinen Pulvers und eines Mittels oder Additivs zur Extrusion von PTFE, welche per se auf dem Gebiet der Monofilament-Extrusion bekannt ist;
(b) Herstellen einer Vorform durch mechanisches Pressen der Mischung;
(c) Extrudieren einzelner Monofilamente, vorzugsweise mittels eines Mehrfachextrusionsdüsenextruders, wobei einzelne Monofilamente mit einem Durchmesser zwischen 0,3 und 1,9 mm und mit einer Dichte von 1,5 g/cm³ erhalten werden, was für ungesintertes PTFE charakteristisch ist;
(d) Erhitzen der Monofilamente auf eine Temperatur, die für die Extraktion des Extrusionsadditivs geeignet ist;
(e) Strecken des resultierenden Monofilaments bei einer Temperatur zwischen 260 und 315°C, um so dessen Dichte auf einen Wert zwischen 0,2 und 1 g/cm³ zu reduzieren;
(f) Kalendrieren des Monofilaments, um so dessen Querschnitt eine rechteckige Form zu geben; und
(g) Aufwickeln auf eine Bandspule von vorgegebener Länge und Durchmesser.

8. Verfahren zur Herstellung des PTFE-Monofilaments gemäß Anspruch 7, **dadurch gekennzeichnet, dass** die in Stufe (b) erhaltenen Monofilamente einen Durchmesser von nicht weniger als 1,2 mm aufweisen.

9. Verfahren zur Herstellung des PTFE-Monofilaments gemäß Anspruch 7, **dadurch gekennzeichnet, dass** die Erwärmung in Stufe (c) bei einer Temperatur in der Größenordnung von 200°C erfolgt.

10. Verfahren zur Herstellung des PTFE-Monofilaments gemäß Anspruch 7, **dadurch gekennzeichnet, dass** in der Stufe (f) dem Querschnitt des Monofilaments eine rechteckige Form verliehen wird mit einer Dicke von weniger als 2 mm und einer Breite von weniger als 3 mm.

11. Verfahren zur Herstellung des PTFE-Monofilaments gemäß Anspruch 7, **dadurch gekennzeichnet, dass** die Schritte (f) und (g) gleichzeitig durchgeführt werden und das im Kalendrierschritt resultierende Monofilament eine Dichte von zwischen 0,7 und 1,1 g/cm³ aufweist.

## Revendications

1. Matériau d'étanchéité pour joints de tuyauterie, **caractérisé en ce qu'**il consiste en un monofilament en poly(tétrafluoroéthylène) avec une section rectangulaire, ledit monofilament en PTFE ayant une épaisseur inférieure à 2 mm et une largeur inférieure à 3 mm.

2. Matériau d'étanchéité pour joints de tuyauterie selon la revendication 1, **caractérisé en ce que** ledit monofilament de PTFE présente une masse volumique comprise entre 0,7 et 1,1 g/cm³.

3. Procédé de formation de joints hermétiquement étanches entre des tuyaux, du type où les deux tuyaux à joindre ensemble ont des diamètres qui sont légèrement différents l'un de l'autre de sorte que le tuyau de plus petit diamètre qui comporte un filetage sur la surface externe de l'extrémité à joindre peut être vissé dans la portion d'extrémité du tuyau de plus grand diamètre avec un filetage de pas correspondant sur sa surface interne, **caractérisé par** les opérations suivantes consistant à :
(1) enrouler, sur un nombre prédéfini de tours, un monofilament en poly(tétrafluoroéthylène) de section rectangulaire selon la revendication 1 sur ladite portion d'extrémité filetée du tuyau de plus petit diamètre ;
(2) appliquer sur ledit matériau enroulé quelques gouttes d'un lubrifiant et étaler les gouttes sur la surface externe du monofilament en PTFE enroulé ; et
(3) visser l'extrémité à filetage interne du tuyau de plus grand diamètre sur ladite extrémité à filetage externe dudit tuyau de plus petit diamètre avec ledit matériau enroulé jusqu'à l'obtention d'un bon degré de serrage entre les tuyaux.

4. Procédé de formation de joints hermétiquement étanches entre des tuyaux selon la revendication 3, **caractérisé en ce que** ledit lubrifiant est une composition liquide détergente.

5. Procédé de formation de joints hermétiquement étanches entre des tuyaux selon la revendication 4, **caractérisé en ce que** ladite composition liquide détergente est biodégradable.

6. Procédé de formation de joints hermétiquement étanches entre des tuyaux selon la revendication 3, **caractérisé en ce que** ledit lubrifiant est ajouté dans des quantités telles qu'après étalement, le monofilament en PTFE enroulé est légèrement moite.

7. Procédé de fabrication du monofilament en PTFE utile comme matériau d'étanchéité selon chacune des revendications précédentes, qui envisage les étapes consistant à :
(a) préparer un mélange d'extrusion comprenant du PTFE pur sous forme de poudre fine et un agent ou additif pour l'extrusion de PTFE, qui est bien connu en soi dans l'art de l'extrusion de monofilament ;
(b) préparer une préforme au moyen d'un pressage mécanique dudit mélange ;
(c) extruder des monofilaments individuels, de préférence au moyen d'une extrudeuse à buse d'extrusion multiple, pour obtenir des monofilaments individuels ayant un diamètre compris entre 0,3 et 1,9 mm et une masse volumique de 1,5 g/cm³, ce qui est caractéristique du PTFE non fritté ;
(d) chauffer les monofilaments à une température appropriée pour l'extraction de l'additif d'extrusion ;
(e) étirer le monofilament résultant à une température comprise entre 260 et 315 °C de façon à réduire sa masse volumique à une valeur comprise entre 0,2 et 1 g/cm³ ;
(f) calandrer le monofilament de sorte à conférer une forme rectangulaire à la section ; et
(g) enrouler sur une bobine d'une longueur et d'un diamètre prédéterminés.

8. Procédé de fabrication du monofilament en PTFE selon la revendication 7, **caractérisé en ce que** lesdits monofilaments obtenus à l'étape (b) ont un diamètre non inférieur à 1,2 mm.

9. Procédé de fabrication du monofilament en PTFE selon la revendication 7, **caractérisé en ce que** ledit chauffage à l'étape (c) est réalisé à une température de l'ordre de 200 °C.

10. Procédé de fabrication du monofilament en PTFE selon la revendication 7, **caractérisé en ce que** ladite étape (f) confère à la section du monofilament une forme rectangulaire, avec une épaisseur inférieure à 2 mm et une largeur inférieure à 3 mm.

11. Procédé de fabrication du monofilament en PTFE selon la revendication 7, **caractérisé en ce que** lesdites étapes (f) et (g) sont réalisées simultanément et le monofilament résultant de l'étape de calandrage présente une masse volumique comprise entre 0,7 et 1,1 g/cm³.
